# EUROPEAN PATENT APPLICATION

(11) **EP 1 388 863 A1**
(43) Date of publication of application: **11.02.2004**
(21) Application number: 03017544.2
(22) Date of filing: 06.08.2003
(51) Int. Cl.: G11B 27/11, G11B 27/00, G11B 27/34

(54) **Method and apparatus for reproducing and outputting program information, and recorded medium**

(30) Priority: 08.08.2002 JP 2002230821
(71) Applicant: Pioneer Corporation, Tokyo-to (JP)
(72) Inventor: Naohara, Shinichi, Yamada Kawagoe-shi Saitama-ken (JP); Sasaki, Takashi, Yamada Kawagoe-shi Saitama-ken (JP); Yoshida, Masao, Yamada Kawagoe-shi Saitama-ken (JP); Okamoto, Yasuhisa, Yamada Kawagoe-shi Saitama-ken (JP); Matsuo, Kazunori, Yamada Kawagoe-shi Saitama-ken (JP)
(74) Representative: Klingseisen, Franz, Dipl.-Ing.

(57) **Abstract**

An apparatus (S) for reproducing and outputting program information, has a reproduction unit (2) which reproduces the program information recorded on a recording medium; an output unit (3) which outputs the reproduced program information; and a controller (4) which controls a reproducing operation carried out by the reproduction unit (2). The controller (4) includes an image-data registering device which acquires image data from a recording medium on which the program information including the image data is recorded and registers the acquired image data into a memory, and an image-data outputting device which reads out the image data from the memory and outputs the read-out image data to the output unit in cases where audio data is reproduced from a recordingmedium on which the program information including the audio data but including no image data is recorded.

## Description

### BACKGROUND OF THE INVENTION

### Field of the Invention:

The present invention relates to a method and apparatus for reproducing and outputting program information recorded on a recording medium.

### Description of the Related Art:

Recently, an audio reproducing and outputting apparatus has become popular, in which disks such as a CD (Compact Disk) on which audio data is recorded and recording mediums (Disks) such as a DVD (Digital Versatile Disc) on which not only audio data but also image data are recorded are contained in the same storage unit. This reproducing and outputting apparatus has a disk changer that automatically switches over to a disk to be reproduced, so that the apparatus is able to reproduce audio and/or image data recorded on the disk.

However, this type of audio reproducing and outputting apparatus has the problem that in cases where audio data are reproduced from a CD on which no image data are recorded, the screen of a display becomes so-called "blue screen state. " This screen state will lead to inefficient use of the display.

In consideration of the problem, there has been proposed a reproduction apparatus disclosed by Japanese Patent Laid-open publication No. 2000-268543. This reproduction apparatus is configured as follows. In this reproduction apparatus, image data recorded on mediums, such as a memory stick (registered Japanese trademark) is recorded in advance into an HDD (Hard Disk Drive) by operation of a user. When audio data is reproduced from a CD, the image data that has been recorded is read out from the HDD and provided to a display installed in this apparatus.

However, in the above conventional reproduction apparatus, since the image data for displaying on the display should have been stored in advance in a memory device, such as the HDD by the operation of user, this previous operation becomes a considerable burden or troublesome to the user.

### SUMMARY OF THE INVENTION

It is therefore an object of the present invention to provide a method and apparatus for reproducing and outputting program information, and an information recorded medium which have the capability of allowing image data to be registered in an easier and more efficient way and of having image data used effectively and conveniently in cases where audio data is reproduced from a recording medium on which no image data is recorded.

The above object of the present invention can be achieved by an apparatus for reproducing and outputting programinformation, provided with: a reproduction unit which reproduces the program information recorded on a recording medium; an output unit which outputs the reproduced program information; and a controller which controls a reproducing operation carried out by the reproduction unit, wherein the controller comprise an image data registering device which acquires image data from a recording medium on which the program information including the image data is recorded and registers the acquired image data into a memory, and an image-data outputting device which reads out the image data from the memory and outputs the read-out image data to the output unit in cases where audio data is reproduced from a recording medium on which the program information including the audio data but including no image data is recorded.

According to the present invention, it is possible that image data is automatically acquired from the recording medium, and then registered in an easier and more efficient manner. In addition, when the recording medium on which no image data is recorded is subj ect to reproduction of audio data recorded thereon, alternative image data from the recording medium is outputted to the output unit, so that the image data can be utilized usefully.

The above object of the present invention can be achieved by an apparatus for reproducing and outputting program information, provided with: a storage unit configured to contain a plurality of recording mediums on which program information is recorded; a reproduction unit which reproduces the program information recorded on any one of the plurality of recording mediums; an output unit which outputs the reproduced program information; and a controller which controls a reproduction operation carried. out by the reproduction unit, wherein the controller comprises an image-data registering device which acquires image data from, of the plurality of recording mediums, a recording medium on which the program information including the image data is recorded and registers the acquired image data into a memory, and an image-data outputting device which reads out the image data from the memory and outputs the read-out image data to the output unit in cases where audio data is reproduced from, of the plurality of recording mediums, a recording medium on which the program information including the audio data but including no image data is recorded.

According to the present invention, it is possible that image data is automatically acquired from the recording medium stored in the storage unit, and then registered in an easier and more efficient manner. In addition, when the recording medium on which no image data is recorded is subject to reproduction of audio data recorded thereon, alternative image data from the recording medium is outputted to the output unit, so that the image data can be utilized usefully.

In one aspect of the apparatus of the present invention, the image-data registering device acquires the image data at random from the recording medium including the image data in the program information.

In another aspect of the apparatus of the present invention, the apparatus further has: an input unit for accepting a selection instruction from a user, wherein the image-data registering device provides the user with the acquired image data by way of the output unit, prompts the user to select one or more image data among the provided image data, and registers into the memory the image data selected by way of the input unit operated by the user.

According this aspect, the user registers into the memory desired image data solely, which is chosen from the acquired plural image data.

In further aspect of the apparatus of the present invention; the apparatus further has: an input unit for accepting a selection instruction from a user,wherein the image-data registering device provides the user with the acquired image data by way of the output unit in cases where a plurality of image data have been acquired from any one recording medium to be recorded on the memory, prompts the user to select image data to be representative among the provided image data and registers into the memory the image data selected by way of the input unit operated by the user, the registered image data functioning as representative image data of the one recording medium.

According this aspect, the user registers into the memory desired image data solely as representative image data, which is chosen from the acquired plural image data.

is In further aspect of the apparatus of the present invention, the image-data outputting device reads out the registered representative image data from the memory to output the read-out representative image data to the output unit.

In further aspect of the apparatus of the present invention, the image-data registering device acquires image data of a still picture in preference to other types of image data.

In further aspect of the apparatus of the present invention, the image-data registering device registers into the memory both of the acquired image data and positional information matched with each other, the positional information indicating a storage position of the recording medium on which the acquired image data is recorded.

According this aspect, in registering image data acquired from the recording medium into the memory, the positional information about the recording medium located in the storage unit can be also registered on the memory

In further aspect of the apparatus of the present invention, the apparatus further has a relationship providing device which provides to the user a relationship between the image data recorded on the memory and the storage-positional information of the recording medium by way of the output unit.

According this aspect, one-to-one correspondence (relationship) showing which image data is acquired from which recording medium, becomes clear, even when a plurality of recording medium have undergone the acquisition of their image data. In addition, the user can understand easier about which image data is acquired from recording medium.

In further aspect of the apparatus of the present invention, the controller further includes an ejection detecting device which detects an ejected state of a recording medium stared in the storage unit; a register determining device which determines whether the image data has been acquired from the recording medium and recorded on the memory in cases where the ejecting operation of the recording medium is detected by the ejection detecting device; and an image-data deleting device which deletes the image data from the memory in cases where it is determined by the register determining device that the image data is registered on the memory.

According this aspect, rights such as reproduction right of a copyright holder can be preserved.

In still further aspect of the apparatus of the present invention, the output unit has a display device for displaying image data, wherein the display device displays, as a background image, the image data outputted from the image-data outputting device.

According this aspect, it is possible that image data is automatically acquired from the recording medium, and then registered in an easier and more efficient manner. In addition, when the recording medium on which no image data is recorded is subject to reproduction of audio data recorded thereon, image data from the recording medium is displayed on the display as the background image, so that the image data can be utilized usefully.

The above object of the present invention can be achieved by a method of reproducing program information recorded on recoding medium and outputting the reproduced programinformation, provided with the processes of: acquiring image data from a recording medium on which the program information including the image data is recorded; registering the acquired image data into a memory; and reading out the registered image data from the memory and outputting the read-out image data in cases where audio data is reproduced from a recording medium on which the program information including the audio data but including no image data is recorded.

The above object of the present invention can be achieved by an information recorded medium wherein a program for computer which controls reproduction and output of program information recorded on recording medium, is recorded so as to be read by the computer, the program makes the computer function as: acquiring image data from a recording medium on which the program information including the image data is recorded; registering the acquired image data into a memory; and reading out the registered image data from the memory and outputting the read-out image data in cases where audio data is reproduced from a recording medium on which the program information including the audio data but including no image data is recorded.

The above object of the present invention can be achieved by an information recorded medium wherein a program for computer which controls reproduction and output of program information recorded on any one of a plurality of recording mediums, is recorded so as to be read by the computer, the program makes the computer function as: acquiring image data from, of the plurality of recording mediums, a recording medium on which the program information including the image data is recorded; registering the acquired image data into a memory; and reading out the image data from the memory and outputting the read-out image data in cases where audio data is reproduced from, of the plurality of recording mediums, a recording medium on which the program information including the audio data but including no image data is recorded.

### BRIEF DESCRIPTION OF THE DRAWINGS

Other objects and aspects of the present invention will become apparent from the following description and embodiments with reference to the accompanying drawings in which:
FIG. 1 exemplifies a schematic block diagram of an audio reproducing and outputting apparatus according to one example of the present invention;
FIG. 2 exemplifies a logical recording format of a DVD-Video;
FIG. 3 shows an example of frame images that composes a GOP;
FIG. 4 schematically illustrating the configuration of contents recorded in a memory;
FIG. 5 exemplifies thumbnail display on a display, the thumbnail display showing the relationship between storage positional information of disks and image data recorded on the memory;
FIG. 6 is a flowchart showing registration processing for image data, which is carried out by a system controller;
FIG. 7 is a flowchart showing provision and assignment processing for the image data, which is carried out by a system controller;
FIG. 8 is a flowchart showing output processing for image data, which is carried out by a system controller; and
FIG. 9 is a flowchart showing deletion processing for the image data, which is carried out by a system controller.

### DETAILED DESCRIPTION OF PREFERRED EMBODIMENTS

Referring to the accompanying drawings, a preferred embodiment of the present invention will now be explained. The following embodiment will be described about an audio reproducing and outputting apparatus to which the present invention is applied.

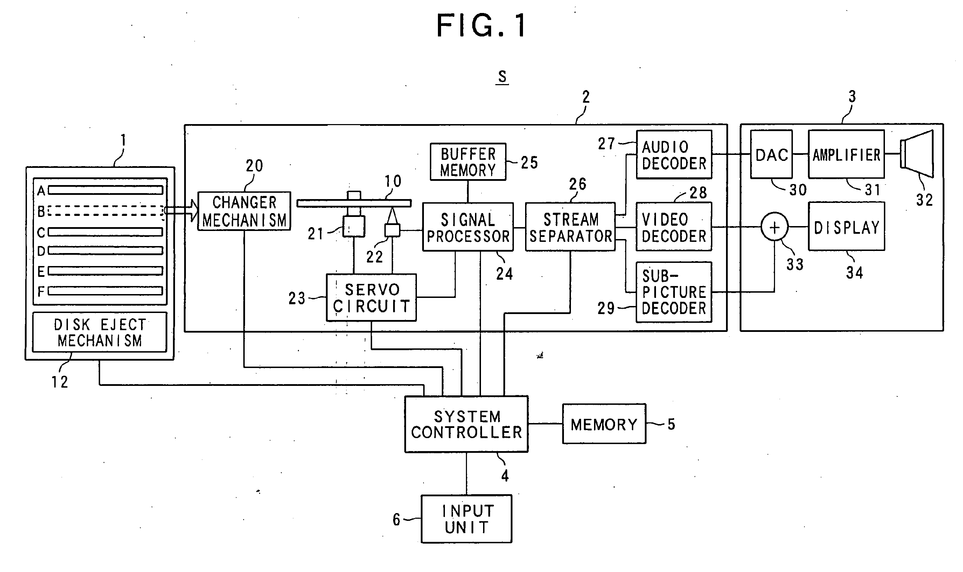

In reference to FIG. 1, the configuration and functions of the audio reproducing and outputting apparatus according to the present embodiment will now be described.

FIG. 1 shows an schematic block diagram of the audio reproducing and outputting apparatus in accordance with the present embodiment: As shown in FIG. 1, from a roughly sectioned viewpoint, the audio reproducing and outputting apparatus S is provided with a disk storage unit 1, information reproducing unit 2 , information outputting unit 3 , system controller 4 , memory 5, and input unit 6. Of these components, the disk storage unit 1, which serves as a storage unit, has the capacity of storing a plurality of disks 10 therein. The disks 10 serve one kind of recording mediums. The information reproducing unit 2,which serves as a reproduction unit, is disposed to convey a designated disk 10 in the disk storage unit 1 onto a turntable to be located thereon and reproduce program information read out from the disk 10 . Furthermore, the information outputting unit 3 , which serves as an output unit, is in charge of outputting the program information reproduced by the information reproducing unit 2. The system controller 4 functions as a controller to control various operations, which includes a reproducing operation carried out by the information reproducing unit 2. 'The memory 5 is used to register (memorize) image data therein, while the input unit 6 for accepting user's various operational commands (instructions).

The disc storage unit 1 is enclosed by a box-like chassis and is equipped with a plurality of shelves each structured into a tray (that is, in the example shown in FIG. 1, six shelves A to F). Additionally, the disc storage unit 1 is also equipped with a disk eject mechanism 12, which allows each disk 10 to be inserted thereinto and to be ejected therefrom through a disk loading slot formed in the chassis. On each of the trays within the disk storage unit 1, each disk 10 is placed, so that, for example, six disks 10 are stored within the chassis, with the disks 10 layered in the Y-axis direction in the chassis (for example, the vertical direction thereof). For example, if a user presses down a disk eject button installed on the chassis or others, the disk eject mechanism 12 is driven so that a tray on which a disk to be ejected from the disk storage unit 1 is placed is positioned at the disk loading slot and then ejected in the Z-axis direction (for example, the back-and-forth direction of the chassis). This allows the user to eject a desired disk 10 that has been stored in the disk storage unit 1 through the disk loading slot. On the other hand, when the user wants a disk 10 to be stored in the disk storage unit 1, the user simply inserts the disk 10 into the disk loading slot in the Z-axis direction, which enables the disk 10 to be placed on a tray in the disk storage unit 1.

Stored in the disk storage unit 1 are for example DVDs and/or CDs, which serve as the disks 10. The DVDs include, as their types, DVD-Video and DVD-Audio. Pieces of information about programs (program information) recorded on those DVDs include audio data and image data. The CDs include, as their types, Video-CD , CD-DA and dts-CD. Program information recorded on each Video-CD includes audio data and image data, while program information recorded on each CD-DA or each dts-CD includes only audio data but includes no image data.

The information reproducing unit 2 is provided with a changer mechanism 20 , spindle circuit 21, pickup 22 , servo circuit 23, signal processor 24, stream separator 26, audio decoder 27, video decoder 28, and sub-picture decoder 29. Of these constituents, the changer mechanism 20 is placed to carry a specified disk 10 stored in the disk storage unit 1 toward a turntable to position it at a given clamp position on the turntable. The spindle motor 21 causes the disk 10 located at the given (predetermined) clamp position to turn at a given (predetermined) line speed. The pickup 22 optically reads out the program information recorded on the disk 10 to output an RF (Radio Frequency) signal corresponding to the program information that has been read out. The servo circuit 23 is provided to servo-control both the spindle motor 21 and the pickup 22. The signal processor 24 is disposed to perform various types of processing, such as demodulation and error correction, on the RF signal from the pickup 22 so that its processed signal is temporarily stored in a buffer memory 25 and to provide the stream separator 26 with the demodulated data that has been stored. The stream separator 26 is in charge of separating and extracting, from the demodulated data that has been came from the signal processor 24, a pack of navigation data (navigation pack), a pack of audio data (audio pack), a pack of image data (video pack) , and a pack of sub-picture data (sub-picture pack). Further, the audio decoder 27 carries out given (predetermined) decoding processing on the audio data outputted from the stream separator 26 and provides its processed data to the information outputting unit 3. The video decoder 28 also carries out given (predetermined) decoding processing on the image data outputted from the stream separator 26 and provides its processed data to the information outputting unit 3. In addition, the sub-picture decoder 29 executes given (predetermined) decoding processing on the sub-picture data outputted from the stream separator 26 and provides its processed data to the information outputting unit 3 . On the other hand, the navigation pack derived from the stream separator 26 is routed to the system controller 4.

Under the control of the system controller 4 , the changer mechanism 20 makes a connection with the tray on which a disk 10 selected in response to a user's operation carried out on the input device 6 and pulls forth the tray until the given clamp position.

The pickup 22 is configured to realize the reproduction of program information recorded on the disks, such as DVD and CD. By way of example, the pickup 22 is configured to operate on a twin-lens optical pickup technique, in which there are provided two lenses; one is a DVD-use objective lens (not shown) having an NA optimized for DVD and the other is a CD-use obj ective lens (not shown) having another NA optimized for CD. The pickup 22 is subjected to control of the servo circuit 23 controlled by the system controller 4, such that the two lenses are mutually switched over and selectively used for either a DVD or a CD. The determination whether or not the disk 10 located at the given clamp position is a DVD or CD is carried out by the system controller 4 based on a signal read out from the pickup 22 . This determination technique has been known, thus its explanation being omitted.

An alternative configuration of the pickup 22 is that the pickup 22 employs a bifocal optical pickup technique that involves a bifocal lens to produce two types of optical spots.

The stream separator 26 extracts only audio data from the demodulated data to provide its extracted data to the audio decoder 27, in cases where the program information recorded on the disk 10 does not include image data (for example, the disk 10 is a CD-DA or dts-CD). Meanwhile, when the program information recorded on the disk 10 includes image data (for example, the disk 10 is a DVD-Video, DVD-Audio or Video-CD) , the stream separator 26 operates to additionally output the image data to the system controller 4 under the control thereof.

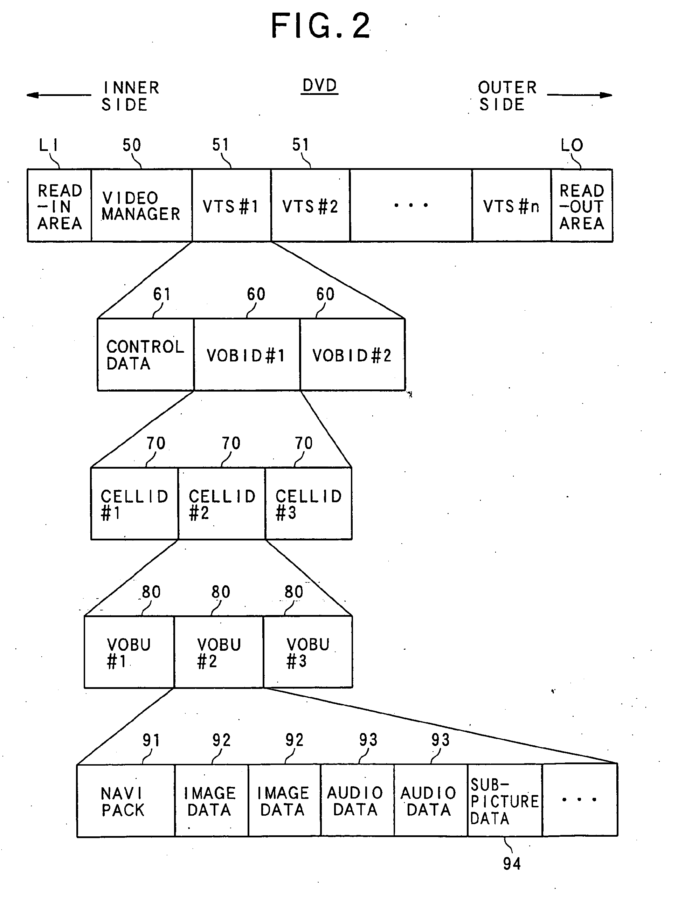

Referring to FIG. 2, a logical recording format for a DVD-Video, which is employed as the disk 10, will now be described. FIG. 2 exemplifies such a format directed to the DVD-Video.

As shown in FIG. 2, a DVD-Video 10a used in this embodiment has a read-in area LI at its inner-most circumferential region and a read-out area LO at its outermost circumferential region. The DVD-Video 10a has a middle area located between the read-in and read-out areas, in which image information and audio information divided into a plurality of VTSs (Video Title Sets) 51 (from VTS#1 to VTS#n) each having an ID (identification) number are recorded thereon. The VTS is a set of related titles, in which the "related" means that the attributes, such as the number of pieces of audio information and the number of pieces of sub-image information recorded on the DVD-Video, specifications thereof, and languages written thereon, are the same, while the "titles" expresses a work, such as movie, which is provided to viewers from a producer. Concretely, using the VTS makes it possible to cope with different situations; for instance, the same one movie is recorded into a plurality of different movies whose scripts are written in different languages and which have individual titles, or even the same movie is recorded in both an on-theater-screen edition and a special edition which have individual titles.

At the head of the VTSs 51, a video manager 50 is recorded. Information recorded in the video manager 50 includes menu images each indicative of the name of each title, information for preventing illegal copy, or access tables for accessing each title, which relate to the entire image and audio information recorded on the DVD 1. Either the signal processor 24 or the stream separator 26 is responsible for providing the system controller 4 with the information owned by the video manager 50.

Each VTS 51 is composed of control data 61 located at the head thereof and a plurality of divided VOBs (Video Object) 60 each having an ID number. In this embodiment, the part made up of a plurality of VOBs 60 is refereed to as a VOB set (VOBS) . This VOB set is defined to distinguish the part composed of a plurality of VOBs 60, which is a substantial part of the image and audio information, from the control data 61 which is incorporated as the remaining data in the VTS 51.

The control data 61 recorded at the head of the VTS 51 includes various types of information, including PGCI (Program Chain Information) that indicates various pieces of information about a program chain composed of logical classifications defined based on combinations of a plurality of cells. In addition to the control information, each VOB 60 includes the substantial part composed of image and/or audio information (that is, the image and/or audio information itself other than the control information).

Each VOB 60 consists of a plurality of cells 70 to each of which an ID number is assigned. In addition, each VOB 60 is composed to be completed by the plurality of cells 70, with the result that one cell 70 is not straddled over two adjacent VOBs 60.

Each cell 70 is composed of a plurality of VOB units (VOBU) to each of which an ID number is assigned. The VOB unit 80 shows one unit that is made up of either image and audio information or sub-image information (that is, information indicative of sub-image such as scripts of a movie), or made up of only a navigation pack.

Each VOB unit 80 consists of a navigation pack 91 (hereafter referred to as a "NAVI PACK") in which stored is control information directed to the control of image information and others included in the VOB unit 80, image data (video data) 92 that is image information, audio data 93 that is audio information, andsub-picture data 94 that issub-image information. Recorded as the sub-picture data 94 are graphic data of characters, figures and others.

Although the navi pack 91 is always located at the head of the VOB unit 80, it is not limited to place each of the image data 92, audio data 93 and sub-picture data 94 within the VOB unit 80. Even when each of those data 92 to 94 is present within the VOB unit 80, the number and/or order of those data may be changed to a desired amount and/or a desired order. In general, the segment composed of each of the image data 92, audio data 93 and sub picture data 94 is known as a pack P. That is, in each VOB unit 80, it can be stated that each of the image data 92, audio data 93 and sub-picture data 94 is divided to form a plurality of packs P and recorded in the form of the packs P. Hence, the pack P in which the image data 92 is recorded is called video pack, the pack P in which the audio data 93 is recorded is called audio pack, and the pack p in which the sub-picture data 94 is recorded is called sub-picture pack.

At a pack header recorded at the head of each pack P, a variety of bits of information is recorded. Such information includes information indicative of reading start time, known as an SCR (System Clock Reference) , which shows a reading start time in the time axis, at which data included in each pack P should be read out from the buffer memory 25 and then started to be sent to each corresponding decoder, and a start code showing the start of each pack P.

Moreover, all the image data 92 included in each VOB unit 80 is composed of for example one or more GOPs (Group Of Pictures). This GOP indicates a minimum image unit reproducible solely and defined on the'MPEG (Moving Picture Experts Group), which is known image compression technique.

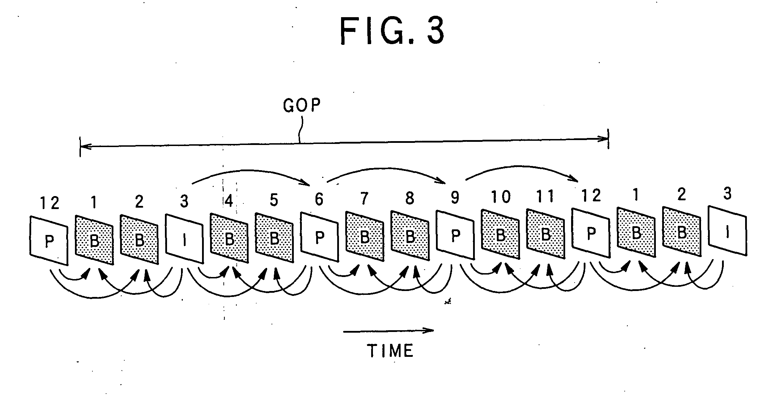

FIG. 3 shows an example of frame images that constitute the GOP. As shown in FIG. 3, each GOP consists of an I-picture (Intra-coded picture: in-frame intra-coded picture) shown by a reference "I," P-pictures (Predictive-coded pictures) noted by a reference "P," and B-pictures (Bidirectionally predictive-coded pictures) noted by a reference "B." In the example illustrated in FIG. 3, the GOP is made up of 12 pieces of frame images, however the number of frame images included in each GOP is not fixed. The I-picture is a frame image that is able to produce a complete frame image from its own image. The P-picture shows a predictive image produced by, for,example, decoding a difference from a predictive image compensatory-produced using an already decoded I-picture or other P-pictures. Further, the B-picture is a predictive image produced through prediction considering an upcoming (temporally futuristic) I-picture or P-picture, which are recorded on an optical disk or others, as well as the already decoded I-picture or P-picture.

On the other hand, in cases where a CD is used as the disk 10, as is known, TOC (Table Of Contents) information is recorded at a Q-channel data area of a sub code in the read-in area positioned inner-circumferentially on the disk, while.audio data is recorded at a program area located outside the read-in area. Furthermore, in the case of a Video-CD is used as the disk 10, both of image and audio data are recorded in a program area located outside the read-in area thereof, while entry information indicating start positions of both the image and audio data is recorded at outward tracks in the read-in area. The image data on the Video-CD is also formed on the specifications according to the MPEG.

Returning to FIG. 1, the information outputting unit 3 will now be described. The information outputting unit 3 is equipped with a DAC (Digital-to-Analog Converter) 30, AMP (Amplifier) 31, speaker 32, mixer 33, and display 34 serving as display device. Of these components, the DAC 30 is disposed to apply digital/analog conversion to the audio data 93 outputted from the audio decoder 27 and to provide the converted analog audio signal to the AMP 31. The AMP 31 amplifies the received analog audio signal to provide the amplified analog audio signal to the speaker 32. Responsively to reception of the analog audio signal, the speaker 32 outputs sound waves. The mixer 33 is responsible for mutually mixing (synthesizing) the image data 92 outputted from the video decoder 28 and the sub-picture data 94 outputted from the sub-picture decoder 29 , the resultant mixed image data being provided to the display 34. Using the mixed image data provided from the mixer 33, the display 34 visualizes images.

The system controller 4 has various components including a CPU with a calculation performance, RAM providing a work memory area, and ROM in which various programs for a variety of kinds of processing and various data are stored. The ROM in the system controller 4 also memorizes an information reproduction processing program. Executing this program enables the system controller 4 serving as a computer to functionally provide an image data registering device, an image data outputting device, a relationship providing device, an ejection detecting device, a registration determining device, and an image data deleting device. Additionally, the ROM stores data necessary for displaying thumbnails described later.

More concretely, the system controller 4 functions as the image data registering device, which is responsible for not only acquiring image data from a disk 10 on which program information with the image data is registered but also registering (storing) the acquired image data onto the memory 5. For instance, the system controller 4 controls the servo circuit 23 to read out program information from the read-in area and other areas of the disk 10 , and then performs the determination whether the disk 10 is a DVD or a CD. If this determination reveals that the disk 10 is a CD, the system controller 4 moves to the next determination if or not the disk 10 is a Video-CD , the determination being carried out based on for example the entry information. Through these steps for the determination, it can be decided if the disk 10 contains image data or not. When it is found that the disk 10 includes image data, the system controller 4 controls the servo circuit 23 to reproduce the program information registered on the disk 10. The system controller 4 then acquires from the stream separator 26 image data recorded at a given (predetermined) positipn on the disk 10, so that the system controller 4 is able to register (store), for instance, one frame of image data into the memory 5. In the example shown in FIG. 3, such data is one frame of image data of the I-picture. In cases where the disk storage unit 1 stores therein a plurality of disks 10 each of which memorizes the program information including image data, a plurality of sets of image data acquired from those disks 10 respectively are registered in the memory 5. There may be a case in which a plurality of sets of image data are acquired from one disk 10 and registered into the memory 5.

The system controller 4 registers, both such acquired image data and a storage-positional information indicating a storage position of the disk 10 on which the image data is recorded into the memory 5, the storage-positional information being made to relate to the image data. The storage-positional information denotes on which tray (any one of the trays A to F in the example of FIG. 1) in the disk storage unit 1 a specified disk 10 has been placed.

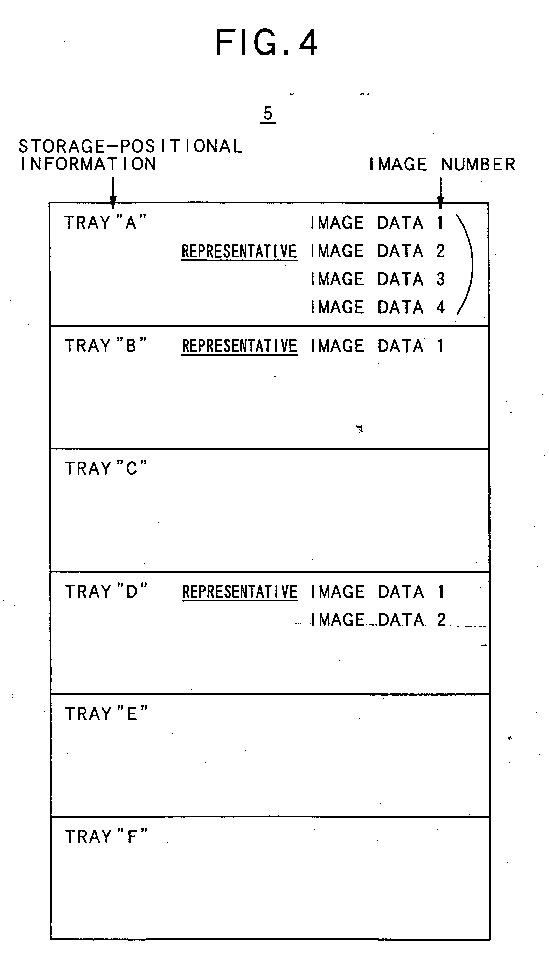

FIG. 4 illustrates a concept explaining the contents memorized in the memory 5. As shown in FIG. 4, both of the storage-positional information and image data in the disks 10 which are made to relate to each other are memorized in the memory 5 . For example, in the disk 10 placed on the tray "A" (for example, DVD-Video), four sets of image data are registered with each image data attached by each image number. Further, on the disk 10 placed on the tray "B" (for example, DVD-Audio), one set of image data is registered. No image data is registered in the disk 10 (for example, CD-DA) placed on the tray "C".

Moreover, as can be seen from the disk 10 placed on the tray "A" shown in FIG. 4, when a plurality of sets of image data on the single disk 10 are registered into the memory 5, the system controller 4 not only provide the registered image data to a user via the information outputting unit 3 but also prompts the user to select a desired one set of image data as a representative. By way of example, the system controller 4 displays, on the display 34, images based on all the image data registered on the memory 5 and requests the user to select one desired image among the displayed images. If the user responds to this request by selecting a desired image through the input unit 6, the system controller 4 performs the registration of the data of a selected image into the memory 5 as a representative image data of the disk 10. In cases where only one set of image data is registered in a single disk 10, the solely registered image data is automatically assigned to a representative image data.

Incidentally, the memory 5 can be formed of an EEPROM (Electrically Erasalbe Programmable Read Only Memory), a hard disk, or other memory means.

In addition, the system controller 4 functions as the relationship providing device, which enables the relationship between the storage-positional information about the disks 10 and the image data registered on the memory 5 to be provided to the user via the information outputting unit 3. Providing this relationship is realized, for example, through display of thumbnails that shows the relationship between the storage-positional information about the disks 10 and the image data.

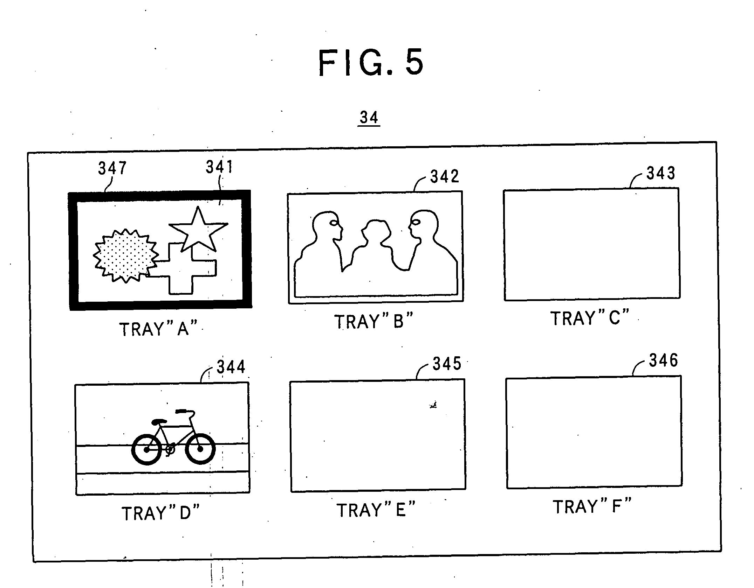

FIG. 5 illustrates examples of such thumbnails displayed on the screen of the display 34, the thumbnails showing the relationship between the storage-positional information about the disks 10 and the image data registered on the memory 5. As shown in FIG. 5, on the screen of the display 34 are image display regions (denoted by references 341 to 346) located correspondingly to the trays (Ato F) serving as the storage positions. For example, concerning the disk 10 (for instance, DVD-Video) placed on the tray "A" , a representative image data of the four sets of image data registered on the memory 5 is presented as an image at the image display region 341. By contrast, since there is no image data registered on the disk 10 (for instance, CD-DA) placed on the tray "C" , no image display is carried out at the image display region 343 , so that a blue screen (i. e. , the background is entirely inblue) is presented. Additionally, of the image display regions 341 to 346 on the screen of the display 34, a currently selected image display region is presented with the display of a cursor 347. The cursor 347 is movable in response to user's operations conducted via the input unit 6.

An alternative configuration is that the system controller 4 acquires information indicating the types of the disks 10 from the signal processor 24 of the information reproducing unit 2 and then displays the acquired type information corresponding one-to-one to the trays (A to F) serving as storage positions under the display of the thumbnails as shown in FIG. 5.

Additionally, using the displayed thumbnails, a user is able to assign the image data registered on the memory 5 to one or more disks 10 on each of which program information with audio data and with no image data is recorded (for example, CD-DA and dts-CD).

The system controller 4 also functions as image data outputting device when audio data is reproduced from a disk 10 on which program information with audio data and with no image data is recorded (for example, CD-DA and dts-CD) , of the disks 10 stored in the disk storage unit 1, reads out image data, which has been registered on the memory 5 and assigned to the disk 10, from the memory 5 and supplies the read-out image data to the information outputting unit 3 via the information reproducing unit 2. This makes it possible that an image (background image) in association with the image data is displayed on the display 34 of the information outputting unit 3, while the audio data is reproduced from the disk 10 (such as CD-DA and dts-CD), and sound (such as a musical composition) is being outputted.

Further, the system controller 4 has the function of the ejection detecting device and detects the eject operation of each disk 10 that has been stored in the disk storage unit 1. Practically, when the eject operation of a disk 10 from the disk storage unit 1 is started together with a tray, a signal that indicates which tray has been ejected is supplied from the disk eject mechanisms 12 to the system controller 4, with the result that the system controller 4 uses the signal to detect the eject operation of the disk 10. Responsively to the detection of the eject operation, the system controller 4 operates as the registration determining device. In other words, it is determined by the system controller 4 if or not image data has been acquired from the disk 10 placed on the tray and the acquired image data has been registered on the memory 5. If the determination indicates the completion of such registration, the system controller 4 moves its function to the image data deleting device, resulting in that the image data is deleted in the memory 5.

The input unit 6 is provided with a series of lined-up operation buttons (such as a image-data registration command (instruction) button, image-data provision command button, disk selection command button, image-data switchover command button, image-data assignment command button, program information reproducing command button, program information stop command button, and others) for accepting user's various types of operation commands (such as image data registration command, image-data providing command, disk selection command, image-data switchover command, image-data assigning command, program information reproducing command, program information stop command, and others). In response to a user's pressing operation toward each operation button, a command signal generated correspondingly to the pressed button is provided to the system controller 4.

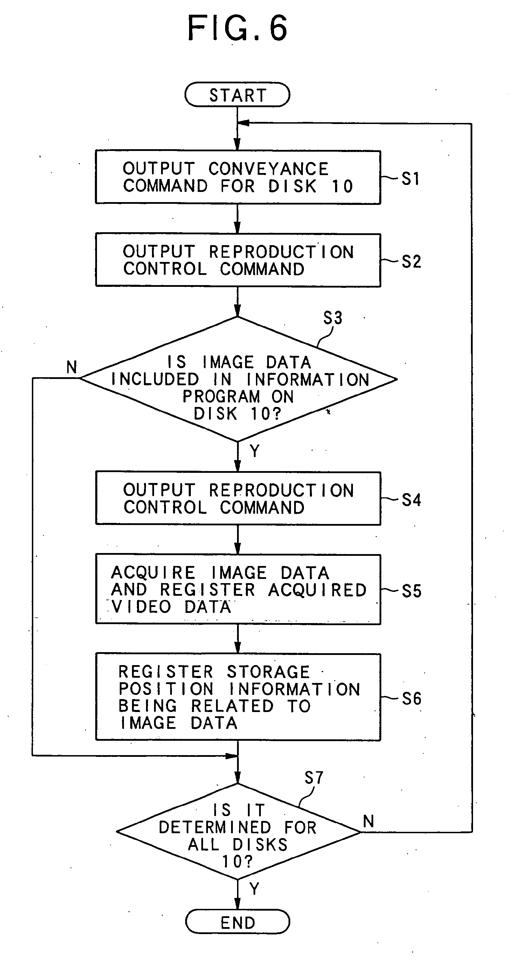

Referring to FIGs. 6 to 9, the operation of the audio reproducing and outputting apparatus according to the present embodiment, will now be described.

### (Image-data registration processing)

First, with reference to FIG. 6, the processing for registering image data recorded on the disk 10 will now be described.

FIG. 6 shows a flowchart for the image-data registration processing carried out by the system controller 4.

When a user presses down the image-data registering commandbutton on the input unit 6 , the system controller 4 responds to this operation, thus starting the processing shown in FIG. 6. First of all, in this processing, a command for conveying, for example, a disk10 placed on the tray "A" in the disk storage unit 1 is issued to the changer mechanism 20 of the information reproducing unit 2 (step S1). In response to this'command, the changer mechanism20 conveys the disk 10 on the tray "A" toward the turntable to position the disk 10 at a given clamp position on the turntable. The system controller 4 then issues a reproduction control command to the serve circuit 23 of the information reproducing unit 2 in order to acquire information required to determine the type of the disk 10 (step S2). This allows the pickup 22 to read out program information recorded at the read-in area and others of the disk 10 , so that the read-out program information is outputted to the signal processor 24. Thus, the signal processor 24 provides the system controller 4 with the information that has been received.

The system controller 4 then uses the information from the signal processor 24 to determine the type of the disk 10, which allows the system controller 4 to decide whether image data is included or not in the program information recorded on the disk 10 (step S3). In cases where the image data is included in the program information on the disk 10 (for example, in cases where the disk 10 is a DVD-Video), the system controller 4 moves to acquisition of a video manager recorded on the DVD-Video. The system controller 4 then makes reference to the acquired video manager (if the disk 10 is a CD-Video, its entry information is subjected to the reference) such that a region at which the image data is read out is decided at random, before providing the servo circuit 23 with a reproduction control command (step S4).

Hence, program information is read out from the decided region on the disk 10 by the pickup 22, being outputted to the signal processor 24. The read-out program information undergoes various types of processing such as demodulation, and then is routed to the stream separator 26. In the stream separator 26, the demodulated data from the signal processor 24 is subject to separation and extraction of image data, so that the 'separated/extracted image data is sent to the system controller 24. The system controller 4 is therefore able to acquire the image data coming from the stream separator 26, give an image number to, for example, one frame of image data of the acquired image data, and register the one frame of image data into the memory 5 (step S5).

The system controller 4 then moves to registration processing, where the storage-positional information indicative of the storage position of the disk 10 on which such image data is registered is made to relate to the image data and registered into the memory 5 (step S6).

On the other hand, when it has been determined that no image data is recorded on the disk 10, the processing of the system controller 4 is shifted to step S7.

At step S7, it is determined whether or not the determination for finding out disks 10 with image data has been completed for the disks 10 placed on all the trays in the disk storage unit 1. This determination shows that there is still left one or more disks 10 that have been yet to be determined, the system controller 4 returns its processing to step S1, and then provides the changer mechanism 20 of the information reproducing unit 2 with a carrying command of, for example, a disk 10 placed on the tray "B" in the disk storage unit 1. Accordingly, the disk 10 placed on the tray "B" is carried toward the turntable to be located at a given clamp position on the turntable. The same processing as the foregoing steps S2 to S6 will also be applied to the disk 10 on the tray "B".

When the disks10 placed on all the trays disposed in the disk storage unit 1 have been subjected to the foregoing processing (step S7) , this processing will be completed, resulting in that the image data has been registered in the memory 5 at the completed time, as shown in FIG. 4, for example.

In this way, a disk 10 on which image data is recorded is detected and selected from a plurality of disks 10 stored in the disk storage unit 1 and the image data is automatically acquired from the selected disk 10. Hence, in cases where a disk 10 with no image data is subjected to reproductive output of audio data recorded thereon, image data which should be outputted to the display 34 can be registered into the memory 5 in an easier and more efficient manner.

Additionally, in registering image data acquired from a disk 10 into the memory 5, the storage-positional information about the disk 10 located in the disk storage unit 10 is also registered on the memory 5. This registration makes it clear the one-to-onecorrespondenceshowing whichimage data is acquired from which disk 10 , even when a plurality of disks 10 have undergone the acquisition of their image data.

Incidentally, the foregoing processing at step S4 may be deformed such that the system controller 4 decides a plurality of positions to read out image data, acquires a plurality of sets of image data from the reproduced program information correspondingly to the decided positions, and registers the acquired image data into the memory 5 . This configuration enables the registration of a variety of types of image data.

The system controller 4 may also be configured such that the controller provides a user with one or more sets of acquired image data via the information outputting unit 3 (for example, making the display 34 visualize on its screen images based on the provided image data) and prompts a user to select one or more image data from the displayed ones'. In this configuration, the system controller 4 registers, into the memory 5, image data that has been selected by the user via the input unit 6 (for example, by pressing down the image―data selection command button) This configuration allows the user to register into the memory 5 desired image data solely, which is chosen from the acquired plural image data.

Further, the system controller 4 may be configured to perform another type of processing at the foregoing step S4. That is, the system manager 4 searches menu image in the video manager or image data of still pictures such as slide shows so that those data is acquired preferentially, and then registers the searched menu image or image data into the memory 5. When there is no image data of such a still picture, it is frequent that start and end positions or thereabout of a title in the program information recorded on a disk 10 are occupied by image data such as title roles, which are unfavorable to the background image. Hence, to avoid this type of image data from being displayed as the background image, it is preferred that image data that mapped in the middle of the title is acquired to be registered into the memory 5.

The above registration of the image data is merely one example of how to register image data into the memory 5, and this is not a definitive list. Alternatively, the registration can be performed as follows. For instance, when a user operates the disk selection command button on the input unit 6 to select a DVD-Video as a disk 10 to be reproduced and presses down the program information reproducing command button, the program information recorded on the DVD-Video is read out, so that its sound is outputted from the speaker 3 and its images are displayed on the display 34 . After this , the user who views the reproduced images presses down the image-data registration command button on the input unit 6 at a desired timing (i.e. , a desired shot), the system controller 4 responds to this pressing operation by acquiring image data at the desired shot in order to register the desired-shot image data into the memory 5.

### (Provision and assignment of image data)

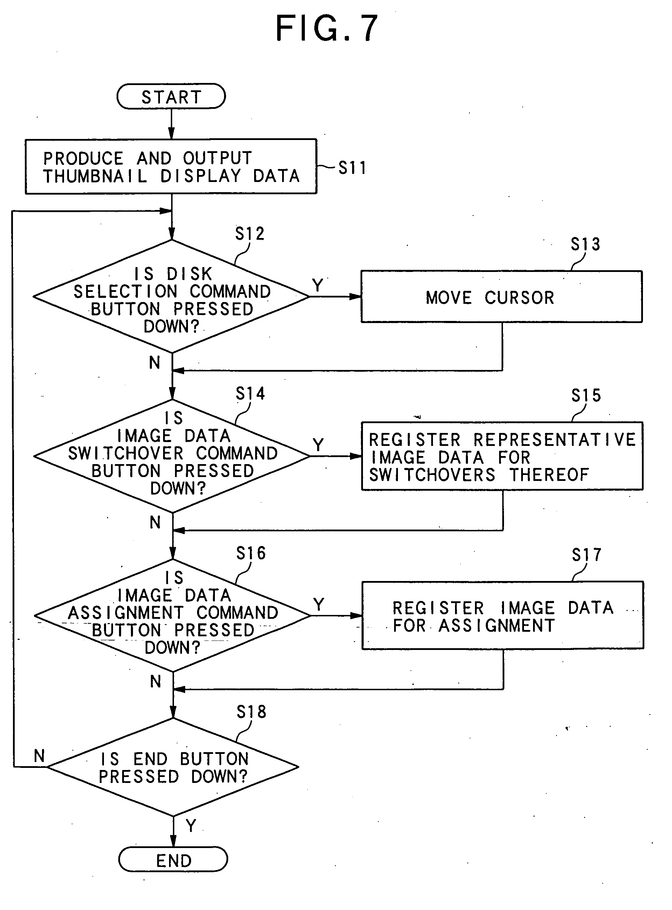

Referring to FIG. 7, provision and assignment of image data registered on the memory 5 will now be described.

The flowchart shown in FIG. 7 indicates provision and assignment processing of image data, which is carried out by the system controller 4.

First, in reply to a user's operation of the image-data. provision commandbutton on the input unit 6, the system controller 4 will start the processing shown in FIG. 7. Practically, the system controller 4 reads out both of the storage-positional information in relation to the disks 10 and the image data (representative image data, in cases where a plurality of sets of image data registered on the same disk 10) , which are registered on the memory 5, and necessary data memorized in the ROM. Using those read-out data, the system controller 4 makes data for thumbnail display and provides the data to the stream separator 26 (step S11).

The thumbnail display data is separated into image data and sub-picture data by the stream separator 26, the image data being sent to the video decoder 28, while the sub-picture data being sent to the sub-picture decoder 29, respectively. These two types of data are mixed with each other by the mixer 33, and then displayed on the display 34. Hence, as shown in FIG. 5, the thumbnails of the image data registered in the memory 5 are provided on the display 34. This display gives the user an easier understanding about which image is acquired from a disk 10 placed on which tray.

Under such a display state, the system controller 4 replies to a user's pressing operation of the disk selection command button on the input unit 6 (step S12) . To be specific, the system controller 4 controls a cursor 347 that appeared on the display 34 so that the cursor 347 moves through the image display regions 341 to 346 on the screen of the display 34 (step S13). Accordingly, every time the user presses down the disk selection commandbutton, the cursor 347 is able to move one image display region to another one.

In cases where the user desires to set representative image data, the system controller 4 operates to move the cursor 347 to the image display region 341 that corresponds to a disk 10 (for example, DVD-Video) in which a plurality of sets of image data are registered. And, on detecting a user's pressing operation of the image-data switchover command button on the input unit 6, the system controller 4 responds to that operation as follows (step S14). Namely, the image data of the next image, which comes next in a series of the image numbers from the currently displayed image, is read out from the memory 5 to be sent to the stream separator 26, so that the next image data is displayed at the image display region 341 on the display 34, while the image data is registered into the memory 5 as representative image data (step S15). Hence, whenever the user presses down the image-data switchover commandbutton, the image data subj ected to the display at the image display region 341 is switched over one from another, which allows the representative image data to be registered in relation to the disk 10 in which a plurality of sets of image data are registered. Incidentally, as described above, in the case that only one set of image data is registered in a disk 10, the image data becomes representative image data.

In addition, when the user desires assignment of image data, the cursor 347 is moved to the image display region 343 that corresponds to a disk 10 with no recorded image data (for example, CD-DA). On detecting a user's pressing operation of the image-data assignment command button on the input device 6, the system controller 4 answers this operation as follows (step S16). That is, the representative image data registered in the memory 5 is read out therefrom to be routed to the stream separator 26. As a result, the representative image data is subj ected to display at the image display region 343 on the display 34, whilst the representative image data is assigned to the disk 10 (for example, CD-DA) to be registered therein (step S17). It is therefore possible that, in response to every time of user's pressing operation of the image-data assignment command button, the representative image data (i.e., for example, the representative image data for each of DVD-Video, DVD-Audio and Video-CD) is switched over and displayed at the image display region 343. Thus image data is assigned to the disk 10 with no recorded image data and registered therein.

When the user presses down the end button on the input unit 6, the system controller 4 responds to that operation by ending the processing (step S18).

As described above, for reproducing/outputting audio data from a disk 10 with no recorded image data, a user is able to easily decide image data which should be outputted to the display 34 on the basis of the display of thumbnails, and assign user's favorite image data to each of the disks 10 on which no image data is recorded.

### (Image-data output processing)

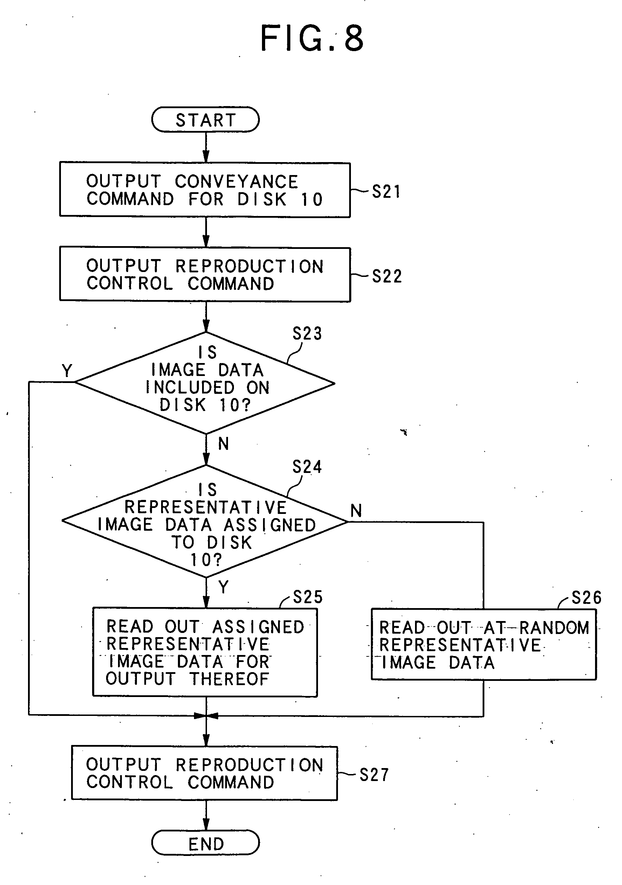

Referring to FIG. 8, output processing of image data registered in the memory 5 will now be explained.

FIG. 8 shows a flowchart outlining output processing of image data carried out by the system controller 4.

When a user selects a disk 10 to be reproduced with the use of the disk selection command button on the input unit 6 and then presses the program information reproduction command button, the system controller 4 responds to those user's operations. That is, the system controller 4 issues a command for carrying a selected disk 10, to the changer mechanism 20 of the information reproducing unit 2 (step S21). This command permits the changer mechanism 20 to operate to convey a selected disk 10 toward the turntable and locate it at a given clamp position on the turntable. In the case that the selected disk 10 has already been located at the given clamp position, the processing at step S21 is omitted, thus being skipped to step S22.

To acquire information required for determining the type of the selected disk 10, the system controller 4 gives the servo circuit 23 of the information reproducing unit 2 a reproduction control command (step S22). This enables the pickup 22 to read out program information recorded in the read-in area and others of the disk 10 and to output the read-out program information to the signal processor 24. The signal processor 24 sends the program information to the system controller 4.

Using the program information coming from the signal processor, the system controller 4 judges the type of the disk 10, which leads to the determination whether or not image data is included in the program information on the disk 10 (step S23). When there is no image data on the disk 10 (for example, the disk 10 is a CD-DA), the system controller 4 makes reference to the memory 5 to determine if there is representative image data assigned to the disk 10 or not (step S24). If this determination reveals that there is representative image data assigned to the disk 10, the system controller 4 reads out the representative image data from the memory 5 and sends its read-out data to the stream separator 26 , so that the read out representative image data is visualized on the screen of the display 34 as its background image (step S25). Meanwhile, when no representative image data assigned to the disk 10 is found out by the above determination at step S24, the system controller 4 extracts at random representative image data registered in the memory 5, and then provides the extracted representative image data to the stream separator 2 6. Accordingly, via the stream separator 26, the randomly extracted representative image data is displayed as a background image on the screen of the display 34 (step S26).

On the other hand, when it is determined at step S23 that there is image data included in the program information on the selected disk 10, the processing is moved to the step S27.

The system controller 4 proceeds to the processing to output the program information, which is carried out by issuing a reproduction control command to the servo circuit 23 of the information reproducing unit 2 (step S27). Responsively to this command, the pickup 22 reads out the program information recorded on the disk 10 to send the read-out information to the signal processor 24. The signal processor 24 applies various types of processing, including given demodulation and error correction, to RF signals generated according to the provided program information. The resultant demodulated signals are temporarily stored in the buffer memory 25, before being sent to the stream separator 26. The stream separator 26 picks up audio data from the demodulated data routed from the signal processor 24, and then sends the picked-up audio data to the audio decoder 2. In consequence, the audio data is sent to the speaker 32 through the audio decoder 2, DAC 30 and amplifier 31, and generated as sound from the speaker 32.

As described above, when the disk 10 on which no image data is recorded is subjected to reproduction and output of audio data recorded thereon, the image data registered in the memory 5 is outputted as alternative image data to the display 34 for an alternative display. It is therefore possible that the image data recorded on the disks 10 stored in the disk storage unit 1 is utilized in a multipurpose manner and the display 34 is utilized effectively.

### (Image-data deletion processing)

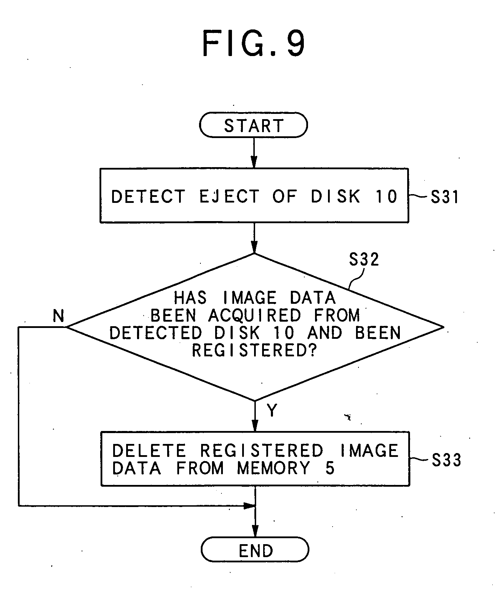

Referring to FIG. 9, the processing for deleting image data registered in the memory 5 will now be described.

FIG. 9 outlines the image-data deletion processing carried out by the system controller 4.

When a user presses down, for example, the disk eject button arranged on the chassis or others of the disk storage unit 1, the disk eject mechanism 12 responds to this operation by ejecting a designated disk 10 from the chassis and providing the system controller 4 with a signal indicative of the ejection of the designated disk 10. On receiving such signal, the system controller 9 begins the processing shown in FIG. 9. First, using the signal indicating the ejection of the designated disk 10, the system controller 4 checks to see a disk 10 at which storage position has been ej ected, of the disks stored in the disk storage unit 1 (step S31).

The system controller 4 then makes reference to the memory 5 in order to determine whether or not image data has been acquired from the eject-detected disk 10 and registered in the memory 5 (step S32). If it is determined that the registration has been made, the image data is deleted from the memory (step S33). For example, the disk 10 of which ejection has been detected is a DVD-Video placed on the tray "A", as shown in FIG. 4, all the four image data registered in the memory 5 should be deleted. This deletion technique prohibits display of the image data on disks which has already been ejected from the disk storage unit 1, with the result that such rights as reproduction right of a copyright holder can be preserved.

As described so far, the present embodiment makes it possible that image data is automatically acquired from the disks 10 stored in the disk storage unit 1, and then registered in an easier and more efficient manner. In addition, when a disk 10 on which no image data is recorded is subject to reproduction of audio data recorded thereon, alternative image data from the disks 10 with the image data is displayed on the display 34, so that both the image data and the display 34 can be utilized usefully.

In the foregoing embodiment, the DVD has been exemplified as a recording medium from which image data acquired, but the present invention is not always limited to such a configuration. Alternatively, various type of recordingmediums, such as amemory stick (registered Japanese trademark) , can be used, from which image data is also automatically acquired to be registered into the memory 5. On the other hand, the recording mediums on which no image data is recorded are not limited to the CD, but may employ other recording mediums, such as MDs (Mini Disks) and MOs (Magneto Optical Disks).

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An apparatus for reproducing and outputting program information, **characterized in that** the apparatus (S) comprises:
a reproduction unit (2) which reproduces the program information recorded on a recording medium (10);
an output unit (3) which outputs the reproduced program information; and
a controller (4) which controls a reproducing operation carried out by the reproduction unit (2),
wherein the controller (4) comprise
an image-data registering device (4) which acquires image data from a recording medium (10) on which the program information including the image data is recorded and registers the acquired image data into a memory (5), and
an image-data outputting device (4) which reads out the image data from the memory (5) and outputs the read-out image data to the output unit in cases where audio data is reproduced from a recording medium (10) on which the program information including the audio data but including no image data is recorded.

2. An apparatus for reproducing and outputting program information, **characterized in that** the apparatus (S) comprises:
a storage unit (1) configured to contain a plurality of recording mediums on which program information is recorded;
a reproduction unit (2) which reproduces the program information recorded on any one of the plurality of recording mediums;
an output unit (3) which outputs the reproduced program information; and
a controller (4) which controls a reproduction operation carried out by the reproduction unit (2),
wherein the controller (4) comprises
an image-data registering device (4) which acquires image data from, of the plurality of recording mediums, a recording medium on which the program information including the image data is recorded and registers the acquired image data into a memory (5), and
an image-data outputting device (4) which reads out the image data from the memory (5) and outputs the read-out image data to the output unit (3) in cases where audio data is reproduced from, of the plurality of recording mediums, a recording medium on which the program information including the audio data but including no image data is recorded.

3. The apparatus (S) according to claim 1 or 2, wherein the image-data registering device (4) acquires the image data at random from the recording medium including the image data in the program information.

4. The apparatus (S) according to claim 1 or 2, further comprising an input unit (6) for accepting a selection instruction from a user,
wherein the image-data registering device (4) provides the user with the acquired image data by way of the output unit (3), prompts the user to select one or more image data among the provided image data, and registers into the memory (5) the image data selected by way of the input unit (6) operated by the user.

5. The apparatus (S) according to claim 1 or 2, further comprising an input unit (6) for accepting a selection instruction from a user,
wherein the image-data registering device (4) provides the user with the acquired image data by way of the output unit (3) in cases where a plurality of image data have been acquired from any one recording medium to be recorded on the memory (5), prompts the user to select image data to be representative among the provided image data, and registers into the memory the image data selected by way of the input unit (6) operated by the user, the registered image data functioning as representative image data of the one recording medium.

6. The apparatus (S) according to claim 5, wherein the image-data outputting device (4) reads out the registered representative image data from the memory to output the read-out representative image data to the output unit.

7. The apparatus (S) according to any one of claims 1 to 6, wherein the image-data registering device (4) acquires image data of a still picture in preference to other types of image data.

8. The apparatus (S) according to any one of claims 2 to 7, wherein the image-data registering device (4) registers into the memory both of the acquired image data and positional information matched with each other, the positional information indicating a storage position of the recording medium on which the acquired image data is recorded.

9. The apparatus (S) according to claim 8, further comprising a relationship providing device (4) which provides to the user a relationship between the image data recorded on the memory and the storage-positional information of the recording medium by way of the output unit (3).

10. The apparatus (S) according to any one of claims 2 to 9, wherein the controller (4) further comprises
an ejection detecting device (4) which detects an ejected state of a recording medium stored in the storage unit;
a registration determining device (4) which determines whether the image data has been acquired from the recording medium and recorded on the memory in cases where the ejecting operation of the recording medium is detected by the ejection detecting device; and
an image-data deleting device (4) which deletes the image data from the memory in cases where it is determined by the register determining device that the image data is registered on the memory (5).

11. The apparatus (S) according to any one of claims 1 to 10, wherein the output unit (3) has a display device (34) for displaying image data,
wherein the display device (34) displays, as a background image, the image data outputted from the image-data outputting device.

12. A method of reproducing program information recorded on recoding medium and outputting the reproducedprogram information, **characterized in that** the method comprising the processes of:
acquiring image data from a recording medium on which the program information including the image data is recorded;
registering the acquired image data into a memory; and
reading out the registered image data from the memory and outputting the read-out image data in cases where audio data is reproduced from a recording medium on which the program information including the audio data but including no image data is recorded.

13. An information recorded medium wherein a program for computer which controls reproduction and output of program information recorded on recording medium, is recorded so as to be read by the computer, the program makes the computer function as:
acquiring image data from a recording medium on which the program information including the image data is recorded;
registering the acquired image data into a memory; and
reading out the registered image data from the memory and outputting the read-out image data in cases where audio data is reproduced from a recording medium on which the program information including the audio data but including no image data is recorded.

14. An information recorded medium wherein a program for computer which controls reproduction and output of program information recorded on any one of a plurality of recordingmediums, is recorded so as to be read by the computer, the program makes the computer function as:
acquiring image data from, of the plurality of recording mediums, a recording medium on which the program information including the image data is recorded;
registering the acquired image data into a memory; and
reading out the image data from the memory and outputting the read-out image data in cases where audio data is reproduced from, of the plurality of recording mediums, a recording medium on which the program information including the audio data but including no image data is recorded.
